# EUROPEAN PATENT APPLICATION

(11) **EP 4 506 206 A2**
(43) Date of publication of application: **12.02.2025**
(21) Application number: 24192161.8
(22) Date of filing: 31.07.2024
(51) Int. Cl.: B60L 53/16, B60L 53/302

(54) **LIQUID-COOLING CHARGING CONNECTOR AND LIQUID-COOLING CHARGING PILE**

(30) Priority: 01.08.2023 CN 202322056883 U
(71) Applicant: Huawei Digital Power Technologies Co., Ltd., Shenzhen, Guangdong 518043 (CN)
(72) Inventor: LI, Pengyun, Shenzhen, 518043 (CN)
(74) Representative: Gill Jennings & Every LLP

(57) **Abstract**

This application provides a liquid-cooling charging connector and a liquid-cooling charging pile. The liquid-cooling charging connector includes a charging connector head and a liquid-cooling cable. The charging connector head is configured to connect to a charging socket of an electric vehicle. The liquid-cooling cable includes a liquid-cooling pipe, a charging cable, and a protection sleeve, and the protection sleeve circumferentially surrounds the liquid-cooling pipe and the charging cable. One end of the liquid-cooling cable is connected to the charging connector head, and the other end of the liquid-cooling cable is configured to connect to the charging pile. At least one end of the liquid-cooling cable includes an inner protection ring, the inner protection ring circumferentially surrounds the liquid-cooling pipe and the charging cable, and the protection sleeve circumferentially surrounds the inner protection ring.

## Description

### TECHNICAL FIELD

This application relates to the field of new energy technologies, and in particular, to a liquid-cooling charging connector and a liquid-cooling charging pile.

### BACKGROUND

As a charging power of an electric vehicle increases, a through-current capability of a charging connector gradually increases. To solve a problem of heat dissipation for the charging connector, a liquid-cooing charging connector is widely used in the industry. Currently, in the industry, a liquid-cooling cable is usually fastened to a charging connector head in a crimping manner and the liquid-cooling cable is usually fastened to a charging pile in a crimping manner. However, the liquid-cooling cable includes a liquid-cooling pipe for a coolant to flow, and the liquid-cooling pipe is generally made of silica gel or plastic. The liquid-cooling pipe is deformed once being under large pressure. As a result, resistance to the coolant in flowing in the liquid-cooling pipe is large.

### SUMMARY

This application provides a liquid-cooling charging connector and a liquid-cooling charging pile, to reduce a deformation degree of a liquid-cooling pipe without reducing a connection force between a liquid-cooling cable and a charging connector head or between the liquid-cooling cable and the charging pile.

According to a first aspect, an embodiment of this application provides a liquid-cooling charging connector. The liquid-cooling charging connector includes a charging connector head and a liquid-cooling cable. The charging connector head is configured to connect to a charging socket of an electric vehicle. The liquid-cooling cable includes a liquid-cooling pipe, a charging cable, and a protection sleeve, and the protection sleeve circumferentially surrounds the liquid-cooling pipe and the charging cable. One end of the liquid-cooling cable is connected to the charging connector head, and the other end of the liquid-cooling cable is configured to connect to a charging pile. At least one end of the liquid-cooling cable includes an inner protection ring, the inner protection ring circumferentially surrounds the liquid-cooling pipe and the charging cable, and the protection sleeve circumferentially surrounds the inner protection ring.

Based on this disposition, when the liquid-cooling cable is connected to the charging connector head in a crimping manner or the liquid-cooling cable is connected to the charging pile in a crimping manner, the inner protection ring may bear a part of pressure, so that pressure on the liquid-cooling pipe can be reduced, a deformation degree of the liquid-cooling pipe can be reduced, and resistance to a coolant in flowing in the liquid-cooling pipe is reduced. Therefore, the coolant flows more smoothly in the liquid-cooling pipe, thereby improving a heat dissipation capability for the charging connector.

In a possible implementation, a compressive strength of the inner protection ring is greater than a compressive strength of the liquid-cooling pipe. Based on this disposition, the inner protection ring can bear most pressure and is not easily deformed, thereby greatly reducing pressure on the liquid-cooling pipe, to better protect the liquid-cooling pipe.

In a possible implementation, a surface that is of the inner protection ring and that faces the protection sleeve includes a protrusion or a groove. The protrusion or the groove may increase a friction force between the inner protection ring and the protection sleeve, so that the inner protection ring and the protection sleeve are more securely connected. There may be a plurality of protrusions or grooves.

In a possible implementation, the charging connector head includes a charging interface and a cable connection end, the charging interface is configured to connect to the charging socket of the electric vehicle, and the cable connection end includes a connection port. The liquid-cooling charging connector further includes a cable locking apparatus, and the cable locking apparatus is of a hollow structure. The cable locking apparatus is located outside the charging connector head and is fastened to the cable connection end. A through hole of the cable locking apparatus communicates with the connection port. The end that is of the liquid-cooling cable and that is connected to the charging connector head includes an inner protection ring, and the end that is of the liquid-cooling cable and that is connected to the charging connector head extends into the charging connector head through the cable locking apparatus and the connection port. The cable locking apparatus tightly presses, along a circumferential direction of the liquid-cooling cable, the end that is of the liquid-cooling cable and that is connected to the charging connector head, to fasten the liquid-cooling cable to the cable locking apparatus. When the cable locking apparatus tightly presses, along the circumferential direction of the liquid-cooling cable, the end that is of the liquid-cooling cable and that is connected to the charging connector head, the inner protection ring at the end that is of the liquid-cooling cable and that is connected to the charging connector head can reduce the pressure on the liquid-cooling pipe, reduce the deformation degree of the liquid-cooling pipe, and further reduce the resistance to the coolant in flowing in the liquid-cooling pipe. In addition, because hardness of the cable locking apparatus is large, the cable locking apparatus outside the charging connector head may further prevent the liquid-cooling cable from being excessively bent, thereby resolving a problem that the liquid-cooling cable is damaged due to excessive bending.

In a possible implementation, the charging connector head includes a charging interface and a cable connection end, the charging interface is configured to connect to the charging socket of the electric vehicle, and the cable connection end includes a connection port. The liquid-cooling charging connector further includes a cable locking apparatus, and the cable locking apparatus is of a hollow structure. The cable locking apparatus is located inside the charging connector head and is fastened to the charging connector head. The end that is of the liquid-cooling cable and that is connected to the charging connector head includes an inner protection ring, and the end that is of the liquid-cooling cable and that is connected to the charging connector head extends into the charging connector head through the connection port and the cable locking apparatus. The cable locking apparatus tightly presses, along a circumferential direction of the liquid-cooling cable, the end that is of the liquid-cooling cable and that is connected to the charging connector head, to fasten the liquid-cooling cable to the cable locking apparatus. When the cable locking apparatus tightly presses, along the circumferential direction of the liquid-cooling cable, the end that is of the liquid-cooling cable and that is connected to the charging connector head, the inner protection ring at the end that is of the liquid-cooling cable and that is connected to the charging connector head can reduce the pressure on the liquid-cooling pipe, reduce the deformation degree of the liquid-cooling pipe, and further reduce the resistance to the coolant in flowing in the liquid-cooling pipe.

In a possible implementation, the liquid-cooling charging connector further includes an outer protection ring, and one end of the outer protection ring is fastened to the cable connection end. The end that is of the liquid-cooling cable and that is connected to the charging connector head extends into the charging connector head through the outer protection ring, the connection port, and the cable locking apparatus. The outer protection ring is fastened to the protection sleeve of the liquid-cooling cable, and a minimum bending radius of the outer protection ring is greater than a minimum bending radius of the charging cable and a minimum bending radius of the liquid-cooling pipe. When the cable locking apparatus is disposed inside the charging connector head, the outer protection ring may be disposed at the cable connection end of the charging connector head, the outer protection ring circumferentially surrounds the end that is of the liquid-cooling cable and that is connected to the charging connector head, and the outer protection ring is fastened to the cable connection end. Because the minimum bending radius of the outer protection ring is greater than the minimum bending radius of the charging cable and the minimum bending radius of the liquid-cooling pipe, the charging cable and the liquid-cooling pipe can be prevented from being damaged due to excessive bending.

In a possible implementation, the liquid-cooling cable further includes a reinforcing rope. The inner protection ring circumferentially surrounds the reinforcing rope, the liquid-cooling pipe, and the charging cable. One end of the reinforcing rope extends into the charging connector head and is fastened to the charging connector head, or one end of the reinforcing rope is fastened to the cable locking apparatus of the liquid-cooling charging connector. The other end of the reinforcing rope is configured to extend into the charging pile and is fastened to the charging pile, or the other end of the reinforcing rope is configured to be fastened to a cable locking apparatus of the charging pile. A length of the reinforcing rope is less than a length of the liquid-cooling pipe and a length of the charging cable. Based on this disposition, when the charging cable and the liquid-cooling pipe are dragged, most dragging forces can be transferred to the reinforcing rope, so that dragging forces applied to the charging cable and the liquid-cooling pipe can be reduced, and the charging cable and the liquid-cooling pipe can be prevented from being damaged.

In a possible implementation, the charging cable includes a power cable, a communication cable, and a ground cable. The charging connector head includes a charging terminal, the charging terminal includes a power terminal correspondingly connected to the power cable, a communication terminal correspondingly connected to the communication cable, and a ground terminal correspondingly connected to the ground cable. The charging connector head further includes a cooling pool, the cooling pool is located on a surface of the power terminal, and the cooling pool is configured to dissipate heat for the power terminal. The charging cable extends into the charging connector head and is correspondingly connected to the charging terminal, and the liquid-cooling pipe extends into the charging connector head and communicates with the cooling pool.

In a possible implementation, the charging cable further includes an auxiliary power cable, and the charging terminal further includes an auxiliary power terminal correspondingly connected to the auxiliary power cable.

In a possible implementation, the end that is of the liquid-cooling cable and that is connected to the charging pile includes an inner protection ring. The end that is of the liquid-cooling cable and that is connected to the charging pile extends into the charging pile through a connection port of the charging pile and the cable locking apparatus of the charging pile. The cable locking apparatus of the charging pile tightly presses, along the circumferential direction of the liquid-cooling cable, the end that is of the liquid-cooling cable and that is connected to the charging pile, to fasten the liquid-cooling cable to the cable locking apparatus of the charging pile. When the cable locking apparatus of the charging pile tightly presses, along the circumferential direction of the liquid-cooling cable, the end that is of the liquid-cooling cable and that is connected to the charging pile, the inner protection ring at the end that is of the liquid-cooling cable and that is connected to the charging pile can reduce the pressure on the liquid-cooling pipe, reduce the deformation degree of the liquid-cooling pipe, and further reduce the resistance to the coolant in flowing in the liquid-cooling pipe.

According to a second aspect, an embodiment of this application further provides a liquid-cooling charging pile. The liquid-cooling charging pile includes a liquid-cooling charging connector and a pile body. The liquid-cooling charging connector includes a charging connector head and a liquid-cooling cable. The charging connector head is configured to connect to a charging socket of an electric vehicle. The liquid-cooling cable includes a liquid-cooling pipe, a charging cable, and a protection sleeve, and the protection sleeve circumferentially surrounds the liquid-cooling pipe and the charging cable. One end of the liquid-cooling cable is connected to the charging connector head, and the other end of the liquid-cooling cable is connected to the pile body. At least one end of the liquid-cooling cable includes an inner protection ring. The inner protection ring circumferentially surrounds the liquid-cooling pipe and the charging cable, and the protection sleeve circumferentially surrounds the inner protection ring.

Based on this disposition, when the liquid-cooling cable is connected to the charging connector head in a crimping manner or the liquid-cooling cable is connected to the charging pile in a crimping manner, the inner protection ring may bear a part of pressure, so that pressure on the liquid-cooling pipe can be reduced, a deformation degree of the liquid-cooling pipe can be reduced, and resistance to a coolant in flowing in the liquid-cooling pipe is reduced. Therefore, this improves a heat dissipation capability for the charging connector.

In a possible implementation, a compressive strength of the inner protection ring is greater than a compressive strength of the liquid-cooling pipe. Based on this disposition, the inner protection ring can bear most pressure and is not easily deformed, thereby greatly reducing pressure on the liquid-cooling pipe, to better protect the liquid-cooling pipe.

In a possible implementation, a surface that is of the inner protection ring and that faces the protection sleeve includes a protrusion or a groove. The protrusion or the groove may increase a friction force between the inner protection ring and the protection sleeve, so that the inner protection ring and the protection sleeve are more securely connected. There may be a plurality of protrusions or grooves.

In a possible implementation, the pile body of the liquid-cooling charging pile includes a connection port. The liquid-cooling charging pile further includes a cable locking apparatus, and the cable locking apparatus is of a hollow structure. The cable locking apparatus is located outside the pile body and is fastened to the pile body. A through hole of the cable locking apparatus communicates with the connection port of the pile body. The end that is of the liquid-cooling cable and that is connected to the liquid-cooling charging pile includes an inner protection ring. The end that is of the liquid-cooling cable and that is connected to the liquid-cooling charging pile extends into the pile body through the cable locking apparatus and the connection port. The cable locking apparatus tightly presses, along a circumferential direction of the liquid-cooling cable, the end that is of the liquid-cooling cable and that is connected to the liquid-cooling charging pile, to fasten the liquid-cooling cable to the cable locking apparatus. When the cable locking apparatus tightly presses, along the circumferential direction of the liquid-cooling cable, the end that is of the liquid-cooling cable and that is connected to the liquid-cooling charging pile, the inner protection ring at the end that is of the liquid-cooling cable and that is connected to the liquid-cooling charging pile can reduce the pressure on the liquid-cooling pipe, reduce the deformation degree of the liquid-cooling pipe, and further reduce the resistance to the coolant in flowing in the liquid-cooling pipe. In addition, because hardness of the cable locking apparatus is large, the cable locking apparatus outside the liquid-cooling charging pile may further prevent the liquid-cooling cable from being excessively bent, thereby resolving a problem that the liquid-cooling cable is damaged due to excessive bending.

In a possible implementation, the pile body of the liquid-cooling charging pile includes a connection port. The liquid-cooling charging pile further includes a cable locking apparatus, and the cable locking apparatus is of a hollow structure. The cable locking apparatus is located inside the pile body, and the cable locking apparatus is fastened to the pile body. The end that is of the liquid-cooling cable and that is connected to the liquid-cooling charging pile includes an inner protection ring. The end that is of the liquid-cooling cable and that is connected to the liquid-cooling charging pile extends into the pile body through the connection port and the cable locking apparatus. The cable locking apparatus tightly presses, along a circumferential direction of the liquid-cooling cable, the end that is of the liquid-cooling cable and that is connected to the liquid-cooling charging pile, to fasten the liquid-cooling cable to the cable locking apparatus. When the cable locking apparatus tightly presses, along the circumferential direction of the liquid-cooling cable, the end that is of the liquid-cooling cable and that is connected to the liquid-cooling charging pile, the inner protection ring at the end that is of the liquid-cooling cable and that is connected to the liquid-cooling charging pile can reduce the pressure on the liquid-cooling pipe, reduce the deformation degree of the liquid-cooling pipe, and further reduce the resistance to the coolant in flowing in the liquid-cooling pipe.

In a possible implementation, the liquid-cooling charging pile further includes an outer protection ring. One end of the outer protection ring is fastened to an outer surface of the pile body. The end that is of the liquid-cooling cable and that is connected to the liquid-cooling charging pile extends into the pile body through the outer protection ring, the connection port, and the cable locking apparatus. The outer protection ring is fastened to the protection sleeve of the liquid-cooling cable, and a minimum bending radius of the outer protection ring is greater than a minimum bending radius of the charging cable and a minimum bending radius of the liquid-cooling pipe. When the cable locking apparatus is disposed inside the pile body, the outer protection ring may be disposed at a joint between the pile body and the liquid-cooling cable. The outer protection ring circumferentially surrounds the end that is of the liquid-cooling cable and that is connected to the charging pile, and the outer protection ring is fastened to the protection sleeve of the liquid-cooling cable. Because the minimum bending radius of the outer protection ring is greater than the minimum bending radius of the charging cable and the minimum bending radius of the liquid-cooling pipe, the charging cable and the liquid-cooling pipe can be prevented from being damaged due to excessive bending.

In a possible implementation, the liquid-cooling cable further includes a reinforcing rope. The inner protection ring circumferentially surrounds the reinforcing rope, the liquid-cooling pipe, and the charging cable. One end of the reinforcing rope extends into the charging connector head and is fastened to the charging connector head, or one end of the reinforcing rope is fastened to a cable locking apparatus of the charging connector head. The other end of the reinforcing rope extends into the pile body of the liquid-cooling charging pile and is fastened to the pile body, or the other end of the reinforcing rope is fastened to the cable locking apparatus of the liquid-cooling charging pile. A length of the reinforcing rope is less than a length of the liquid-cooling pipe and a length of the charging cable. Based on this disposition, when the charging cable and the liquid-cooling pipe are dragged, most dragging forces can be transferred to the reinforcing rope, so that dragging forces applied to the charging cable and the liquid-cooling pipe can be reduced, and the charging cable and the liquid-cooling pipe can be prevented from being damaged.

In a possible implementation, the charging connector head includes a charging interface and a cable connection end, and the charging interface is configured to connect to the charging socket of the electric vehicle. The end that is of the liquid-cooling cable and that is connected to the charging connector head includes an inner protection ring. The end that is of the liquid-cooling cable and that is connected to the charging connector head extends into the charging connector head through a connection port of the charging connector head and the cable locking apparatus of the charging connector head. The cable locking apparatus of the charging connector head tightly presses, along the circumferential direction of the liquid-cooling cable, the end that is of the liquid-cooling cable and that is connected to the charging connector head, to fasten the liquid-cooling cable to the cable locking apparatus of the charging connector head. When the cable locking apparatus tightly presses, along the circumferential direction of the liquid-cooling cable, the end that is of the liquid-cooling cable and that is connected to the charging connector head, the inner protection ring at the end that is of the liquid-cooling cable and that is connected to the charging connector head can reduce the pressure on the liquid-cooling pipe, reduce the deformation degree of the liquid-cooling pipe, and further reduce the resistance to the coolant in flowing in the liquid-cooling pipe.

### BRIEF DESCRIPTION OF DRAWINGS

FIG. 1 is a diagram in which a liquid-cooling charging pile charges an electric vehicle according to an embodiment of this application;
FIG. 2 is a diagram of a structure of a liquid-cooling charging connector according to an embodiment of this application;
FIG. 3A is a cross-sectional diagram of a liquid-cooling cable in FIG. 2;
FIG. 3B is a diagram of a connection between a reinforcing rope in FIG. 3A and a cable locking apparatus;
FIG. 4 is a diagram of a structure of another liquid-cooling charging connector according to an embodiment of this application;
FIG. 5 is a diagram of a liquid-cooling charging pile according to an embodiment of this application; and
FIG. 6 is a diagram of another liquid-cooling charging pile according to an embodiment of this application.

### DESCRIPTION OF EMBODIMENTS

For ease of understanding, terms in embodiments of this application are first explained.

Connection: It should be understood in a broad sense. For example, that A is connected to B may mean that A is directly connected to B or that A is indirectly connected to B through an intermediate medium.

Compressive strength: It is an ability, of a material to resist deformation and damage, corresponding to a case in which an external force applied to the material is pressure. A greater compressive strength indicates a stronger ability of the material to resist deformation and damage.

Minimum bending radius: It is a minimum of a bending radius obtained when a material is not damaged.

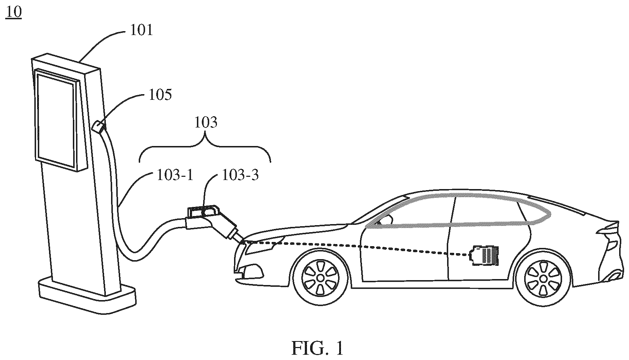

FIG. 1 is a diagram of a structure of a liquid-cooling charging pile according to an embodiment of this application. A liquid-cooling charging connector 103 is an apparatus for transmitting electric energy between the liquid-cooling charging pile 10 and an electric vehicle. The liquid-cooling charging connector 103 includes a liquid-cooling cable 103-1 and a charging connector head 103-3. The charging connector head 103-3 is configured to connect to a charging socket of the electric vehicle. One end of the liquid-cooling cable 103-1 is connected to the charging connector head 103-3, and the other end of the liquid-cooling cable 103-1 is connected to a pile body 101 of the liquid-cooling charging pile 10, so that a current output by the pile body 101 can be transmitted to the vehicle, to charge the vehicle. The liquid-cooling cable 103-1 includes a charging cable, a liquid-cooling pipe, and a protection sleeve. The protection sleeve circumferentially surrounds the charging cable and the liquid-cooling pipe. The liquid-cooling pipe is configured to allow a coolant to flow inside the liquid-cooling pipe, so that the coolant can cool the charging cable.

A cable locking apparatus 105 is of a hollow structure, and one end of the cable locking apparatus 105 is fastened to the pile body. The pile body 101 includes a connection port (not shown in the figure), the connection port communicates with a through hole of the cable locking apparatus 105, and the liquid-cooling cable 103-1 extends into the pile body 101 through the through hole of the cable locking apparatus 105 and the connection port of the pile body 101. The cable locking apparatus 105 tightly presses the liquid-cooling cable 103-1 along a circumferential direction of the liquid-cooling cable 103-1, to fasten the liquid-cooling cable 103-1 to the cable locking apparatus 105. Similarly, a manner of connecting the liquid-cooling cable 103-1 to the charging connector head 103-3 is the same as a manner of connecting the liquid-cooling cable 103-1 to the pile body 101. The cable locking apparatus 105 usually provides large pressure along the circumferential direction of the liquid-cooling cable 103-1, to securely connect the liquid-cooling cable 103-1 to the cable locking apparatus 105. However, the liquid-cooling cable 103-1 includes the liquid-cooling pipe, and the liquid-cooling pipe is generally made of silica gel or plastic. The liquid-cooling pipe is deformed once being under large pressure. As a result, resistance to the coolant in flowing in the liquid-cooling pipe is large, and a heat dissipation capability for the liquid-cooling charging connector is reduced.

In view of this, an embodiment of this application provides a liquid-cooling charging connector, to reduce a deformation degree of a liquid-cooling pipe without reducing a connection force between a liquid-cooling cable and a charging connector head or charging pile.

The liquid-cooling charging connector provided in embodiments of this application includes the charging connector head and the liquid-cooling cable. The charging connector head is configured to connect to a charging socket of an electric vehicle. The liquid-cooling cable includes a liquid-cooling pipe, a charging cable, and a protection sleeve, and the protection sleeve circumferentially surrounds the liquid-cooling pipe and the charging cable. One end of the liquid-cooling cable is configured to connect to the charging connector head, and the other end of the liquid-cooling cable is configured to connect to the charging pile. At least one end of the liquid-cooling cable includes an inner protection ring, the inner protection ring circumferentially surrounds the liquid-cooling pipe and the charging cable, and the protection sleeve circumferentially surrounds the inner protection ring.

Based on this disposition, when the liquid-cooling cable is connected to the charging connector head in a crimping manner or the liquid-cooling cable is connected to the charging pile in a crimping manner, the inner protection ring may bear a part of pressure, so that pressure on the liquid-cooling pipe can be reduced, a deformation degree of the liquid-cooling pipe can be reduced, and resistance to a coolant in flowing in the liquid-cooling pipe is reduced. Therefore, the coolant flows smoothly in the liquid-cooling pipe, thereby improving a heat dissipation capability for the charging connector.

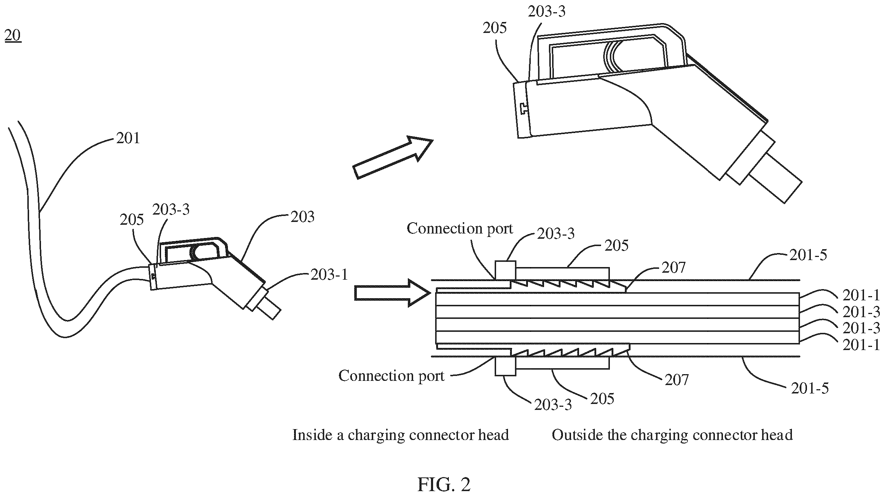

FIG. 2 is a diagram of a structure of a liquid-cooling charging connector according to this embodiment of this application. The liquid-cooling charging connector 20 includes a liquid-cooling cable 201 and a charging connector head 203. The charging connector head 203 includes a charging interface 203-1 and a cable connection end 203-3. The charging interface 203-1 is configured to connect to a charging socket of an electric vehicle. The cable connection end 203-3 includes a connection port. The liquid-cooling cable 201 includes a liquid-cooling pipe 201-1, a charging cable 201-3, and a protection sleeve 201-5. The protection sleeve 201-5 circumferentially surrounds the liquid-cooling pipe 201-1 and the charging cable 201-3.

The liquid-cooling charging connector 20 further includes a cable locking apparatus 205. The cable locking apparatus 205 is of a hollow structure and is located outside the charging connector head 203. The cable locking apparatus 205 is fastened to the cable connection end 203-3 of the charging connector head 203. A through hole of the cable locking apparatus 205 communicates with the connection port of the cable connection end 203-3.

FIG. 2 shows that the cable locking apparatus 205 is fastened to the cable connection end 203-3 in a buckle manner. In another possible implementation, the cable locking apparatus 205 may be fastened to the cable connection end 203-3 in a thread fitting manner. A specific connection manner is not limited.

One end that is of the liquid-cooling cable 201 and that is connected to the charging connector head 203 includes an inner protection ring 207. The end that is of the liquid-cooling cable 201 and that is connected to the charging connector head 203 extends into the charging connector head 203 through the connection port of the cable connection end 203-3 and the cable locking apparatus 205. The cable locking apparatus 205 tightly presses, along a circumferential direction of the liquid-cooling cable 201, the end that is of the liquid-cooling cable 201 and that is connected to the charging connector head 203, to fasten the liquid-cooling cable 201 to the cable locking apparatus 205.

Based on this disposition, the inner protection ring 207 at the end that is of the liquid-cooling cable 201 and that is connected to the charging connector head 203 can reduce pressure on the liquid-cooling pipe 201-1, reduce a deformation degree of the liquid-cooling pipe 201-1, and further reduce resistance to a coolant in flowing in the liquid-cooling pipe 201-1. In addition, because hardness of the cable locking apparatus 205 is large, the cable locking apparatus 205 outside the charging connector head 203 may further prevent the liquid-cooling cable 201 from being excessively bent, thereby resolving a problem that the liquid-cooling cable 201 is damaged due to excessive bending.

In a possible implementation, a compressive strength of the inner protection ring 207 is greater than a compressive strength of the liquid-cooling pipe 201-1. Based on this disposition, the inner protection ring 207 can bear most pressure and is not easily deformed, thereby greatly reducing pressure on the liquid-cooling pipe 201-1, to better protect the liquid-cooling pipe 201-1.

In a possible implementation, a surface of the inner protection ring 207 includes a protrusion or a groove. Therefore, a friction force between the inner protection ring 207 and the protection sleeve 201-5 may be increased, so that the inner protection ring 207 and the protection sleeve 201-5 are more securely connected. FIG. 2 shows that a surface of the inner protection ring 207 includes protrusions in a barb shape. A shape of the protrusion or the groove is not limited in this application.

In a possible implementation, the inner protection ring 207 may be made of aluminum alloy, and the aluminum alloy has light weight, so that weight of the liquid-cooling charging connector 20 is not increased. In another possible implementation, the inner protection ring 207 may be made of copper plastic, and the copper plastic has a high compressive strength, so that the liquid-cooling pipe 201-1 can be better prevented from being deformed due to excessive pressure.

In a possible implementation, the cable locking apparatus 205 may be a gland or a cable locking block. In another possible implementation, the cable locking apparatus 205 may be a metal ring, and the metal ring is tightly pressed along the circumferential direction of the liquid-cooling cable 201, so that the liquid-cooling cable 201 can be fastened to the cable locking apparatus 205. When the cable locking apparatus 205 is located outside the charging connector head 203, a protection cover may be disposed outside the cable locking apparatus 205, to prevent the cable locking apparatus 205 from being damaged.

It should be noted that the inner protection ring 207 only needs to extend from the end that is of the liquid-cooling cable 201 and that is connected to the charging connector head 203 to a position corresponding to the cable locking apparatus 205, to ensure that the liquid-cooling pipe 201-1 is not squeezed by the cable locking apparatus 205, and facilitate subsequent processing. Alternatively, the inner protection ring 207 may be placed inside the protection sleeve in advance. A manner of disposing the inner protection ring 207 is not limited in this application. A length of the inner protection ring 207 does not need to be the same as that of the liquid-cooling cable, and only the inner protection ring 207 needs to be disposed near a crimping position of the cable locking apparatus 205.

Similarly, one end that is of the liquid-cooling cable 201 and that is connected to a charging pile may also include an inner protection ring. The end that is of the liquid-cooling cable 201 and that is connected to the charging pile extends into the charging pile through a connection port of the charging pile and a cable locking apparatus of the charging pile. The cable locking apparatus of the charging pile tightly presses, along the circumferential direction of the liquid-cooling cable 201, the end that is of the liquid-cooling cable 201 and that is connected to the charging pile, to fasten the liquid-cooling cable 201 to the cable locking apparatus of the charging pile.

When the cable locking apparatus of the charging pile tightly presses, along the circumferential direction of the liquid-cooling cable 201, the end that is of the liquid-cooling cable 201 and that is connected to the charging pile, the inner protection ring at the end that is of the liquid-cooling cable 201 and that is connected to the charging pile can reduce the pressure on the liquid-cooling pipe 201-1, reduce the deformation degree of the liquid-cooling pipe 201-1, and further reduce the resistance to the coolant in flowing in the liquid-cooling pipe 201-1.

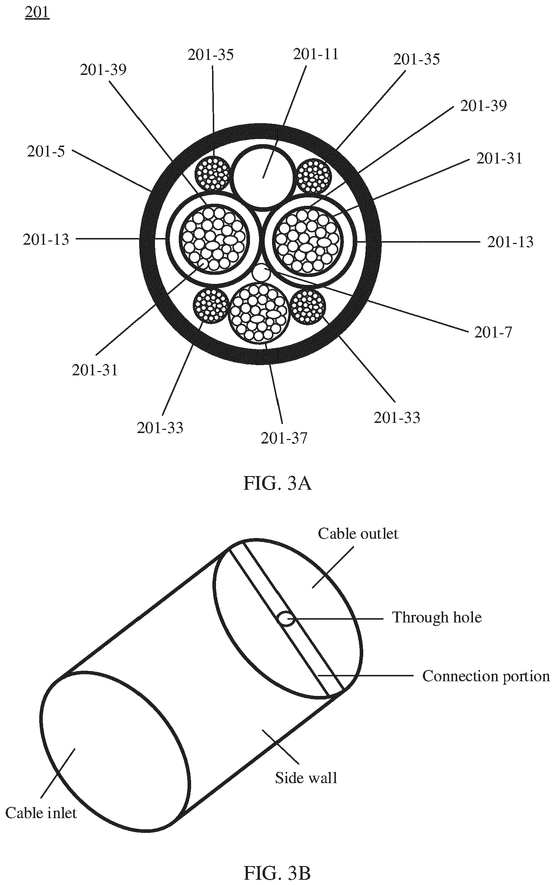

FIG. 3A is a cross-sectional diagram of the liquid-cooling cable in FIG. 2. For ease of describing a manner of disposing the liquid-cooling pipe and the charging cable, the inner protection ring is not shown in the figure. The liquid-cooling cable 201 includes the liquid-cooling pipe 201-1, the charging cable 201-3, and the protection sleeve 201-5. The liquid-cooling pipe 201-1 includes one water inlet pipe 201-11 and two water outlet pipes 201-13. The charging cable 201-3 includes power cables 201-31, communication cables 201-33, and a ground cable 201-37. An insulation layer 201-39 further coats an outer layer of each power cable 201-31, and each water outlet pipe 201-13 circumferentially coats a power cable 201-31 and an insulation layer 201-39. In a possible implementation, the charging cable 201-3 further includes auxiliary power cables 201-35. A gap between each water outlet pipe 201-13 and the power cable 201-31 forms a channel for the coolant to flow.

The charging connector head 203 further includes a charging terminal, the charging terminal includes power terminals correspondingly connected to the power cables 201-31, communication terminals correspondingly connected to the communication cables 201-33, auxiliary power terminals correspondingly connected to the auxiliary power cables 201-35, and a ground terminal correspondingly connected to the ground cable 201-37. The charging connector head 203 further includes a cooling pool, the cooling pool is located on surfaces of the power terminals, and the cooling pool is configured to dissipate heat for the power terminals.

The charging cable 201-3 extends into the charging connector head 203 and is correspondingly connected to the charging terminal. One end of the water inlet pipe 201-11 and one end of each water outlet pipe 201-13 are connected to the cooling pool inside the charging connector head 203, and the other end of the water inlet pipe and the other end of the water outlet pipe are configured to connect to a coolant tank in a pile body of the charging pile, so that the coolant can cyclically flow in the charging connector and the pile body, and the coolant dissipates heat for the power cables and the charging terminal in the charging connector head.

The liquid-cooling pipe circumferentially coats the power cables, so that the power cables can be completely immersed in the coolant, to better cool the power cables.

In a possible implementation, the liquid-cooling pipe 201-1 in FIG. 3A may include only one water inlet pipe and one water outlet pipe. The water inlet pipe circumferentially coats one power cable, and the water outlet pipe circumferentially coats the other power cable.

In another possible implementation, the liquid-cooling pipe may circumferentially coat the power cables, to dissipate heat for the power cables. Alternatively, outer surfaces of the power cables are disposed in contact with an outer surface of the liquid-cooling pipe, to dissipate heat for the power cables. A manner of disposing the liquid-cooling cable is not limited in this application.

In a possible implementation, the liquid-cooling cable 201 in FIG. 3A further includes a reinforcing rope 201-7, and the inner protection ring 207 circumferentially surrounds the reinforcing rope 201-7, the liquid-cooling pipe 201-1, and the charging cable 201-3. One end of the reinforcing rope 201-7 extends into the charging connector head 203 and is fastened to the charging connector head 203, or one end of the reinforcing rope 201-7 is fastened to the cable locking apparatus 205. The other end of the reinforcing rope 201-7 is configured to extend into the pile body of the charging pile and is fastened to the pile body, or the other end of the reinforcing rope 201-7 is fastened to the cable locking apparatus of the charging pile. A length of the reinforcing rope 201-7 is less than a length of the liquid-cooling pipe 201-1 and a length of the charging cable 201-3. The reinforcing rope may be a Kevlar rope or a nylon rope. This is not limited in this application.

In a possible implementation, the reinforcing rope 201-7 may be fastened to the charging connector head 203 in a screw driving manner. Alternatively, the reinforcing rope 201-7 may be tightly bound inside the charging connector head to implement fastening.

In another possible implementation, the reinforcing rope 201-7 may be fastened to the cable locking apparatus 205. As shown in FIG. 3B, the cable locking apparatus 205 includes a cable inlet and a cable outlet. The liquid-cooling cable 201 extends into the cable locking apparatus 205 from the cable inlet, and extends out of the cable locking apparatus 205 from the cable outlet. The cable outlet includes a connection portion, and two ends of the connection portion are separately connected to a side wall, so that the connection portion is fastened to the cable locking apparatus. The reinforcing rope 201-7 may be bound to the connection portion, to be fastened to the connection portion. Alternatively, the connection portion may be provided with the through hole, and the reinforcing rope 201-7 is knotted and bound tightly after passing through the through hole. This is not limited in this application. A manner of fastening the other end of the reinforcing rope 201-7 to the charging pile is similar to a manner of fastening the reinforcing rope 201-7 to the charging connector head 203. Details are not described herein again.

Based on this disposition, when the charging cable 201-3 and the liquid-cooling pipe 201-1 are dragged, most dragging forces can be transferred to the reinforcing rope 201-7, so that dragging forces applied to the charging cable 201-3 and the liquid-cooling pipe 201-1 can be reduced, and the charging cable 201-3 and the liquid-cooling pipe 201-1 can be prevented from being damaged due to excessive dragging.

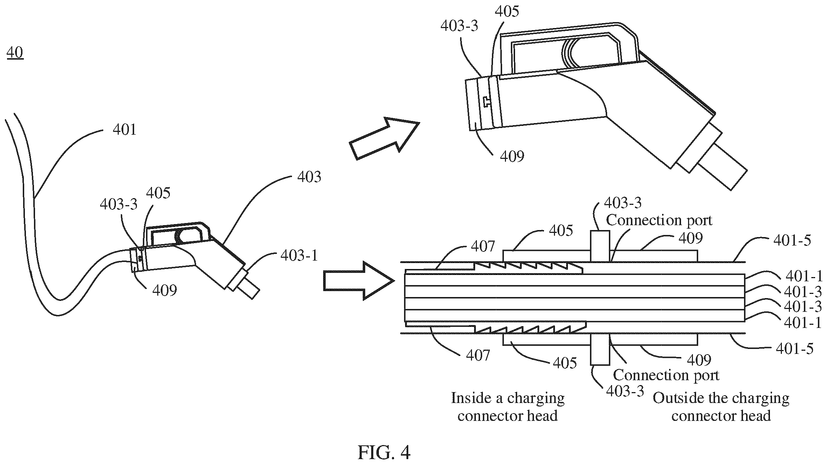

FIG. 4 is a diagram of a structure of another liquid-cooling charging connector according to this embodiment of this application. Different from the liquid-cooling charging connector in FIG. 2, in the liquid-cooling charging connector, a cable locking apparatus is disposed inside a charging connector head. The liquid-cooling charging connector 40 includes a liquid-cooling cable 401 and the charging connector head 403. The charging connector head 403 includes a charging interface 403-1 and a cable connection end 403-3. The charging interface 403-1 is configured to connect to a charging socket of an electric vehicle. The cable connection end 403-3 includes a connection port. The liquid-cooling cable 401 includes a liquid-cooling pipe 401-1, a charging cable 401-3, and a protection sleeve 401-5. The protection sleeve 401-5 circumferentially surrounds the liquid-cooling pipe 401-1 and the charging cable 401-3. The liquid-cooling charging connector 40 further includes the cable locking apparatus 405. The cable locking apparatus 405 is of a hollow structure, is located inside the charging connector head 403, and is fastened to the charging connector head 403.

FIG. 4 shows that the cable locking apparatus 405 is fastened to the cable connection end 403-3 in a buckle manner. In a possible implementation, the cable locking apparatus 405 may be alternatively fastened to the cable connection end 403-3 in a thread fitting manner. In another possible implementation, a clamping slot may be further disposed inside the charging connector head 403, and the cable locking apparatus 405 is clamped into the clamping slot, so that the cable locking apparatus 405 is fastened to the cable connection end 403-3. A manner of fastening the cable locking apparatus 405 to the charging connector head 403 is not limited in this application.

One end that is of the liquid-cooling cable 401 and that is connected to the charging connector head 403 includes an inner protection ring 407. The end that is of the liquid-cooling cable 401 and that is connected to the charging connector head 403 extends into the charging connector head 403 through the connection port of the cable connection end 403-3 and the cable locking apparatus 405. The cable locking apparatus 405 tightly presses, along a circumferential direction of the liquid-cooling cable 401, the end that is of the liquid-cooling cable 401 and that is connected to the charging connector head 403, to fasten the liquid-cooling cable 401 to the cable locking apparatus 405.

Based on this disposition, the inner protection ring 407 at the end that is of the liquid-cooling cable 401 and that is connected to the charging connector head 403 can reduce pressure on the liquid-cooling pipe 401-3, reduce a deformation degree of the liquid-cooling pipe 401-3, and further reduce resistance to a coolant in flowing in the liquid-cooling pipe 401-3.

In a possible implementation, the liquid-cooling charging connector 40 further includes an outer protection ring 409. One end of the outer protection ring 409 is fastened to the cable connection end 403-3, and a through hole of the outer protection ring 409 communicates with the connection port of the cable connection end 403-3. The end that is of the liquid-cooling cable 401 and that is connected to the charging connector head 403 extends into the charging connector head 403 through the outer protection ring 409, the connection port of the cable connection end 403-3, and the cable locking apparatus 405. The outer protection ring 409 is fastened to the protection sleeve 401-5 of the liquid-cooling cable 401, and a minimum bending radius of the outer protection ring 409 is greater than a minimum bending radius of the charging cable 401-3 and a minimum bending radius of the liquid-cooling pipe 401-1.

In a possible implementation, a radius of the through hole of the outer protection ring 409 may be less than or equal to a radius of the liquid-cooling cable 401, so that the outer protection ring 409 may be securely sleeved on an outer surface of the liquid-cooling cable 401. In another possible implementation, the outer protection ring 409 and the protection sleeve 401-5 of the liquid-cooling cable 401 may be bonded together in a low-pressure injection molding manner. A manner of connecting the outer protection ring 409 to the liquid-cooling cable 401 is not limited in this application.

When the cable locking apparatus 405 is located inside the charging connector head 403, the outer protection ring 409 may be disposed at the cable connection end 403-3 of the charging connector head 403. The outer protection ring 409 circumferentially surrounds the end that is of the liquid-cooling cable 401 and that is connected to the charging connector head 403, and the outer protection ring 409 is fastened to the cable connection end 403-3. When the liquid-cooling charging connector 40 includes the outer protection ring, a bending degree of the liquid-cooling pipe 401-1 and a bending degree of the charging cable 401-3 are related to the minimum bending radius of the outer protection ring 409, and the minimum bending radius of the outer protection ring 409 is greater than the minimum bending radius of the liquid-cooling pipe 401-1 and the minimum bending radius of the charging cable 401-3, so that the liquid-cooling pipe 401-1 and the charging cable 401-3 can be prevented from being excessively bent, and the liquid-cooling pipe 401-1 and the charging cable 401-3 are prevented from being damaged.

Similarly, one end that is of the liquid-cooling cable 401 and that is connected to a charging pile may also include an inner protection ring. The end that is of the liquid-cooling cable 401 and that is connected to the charging pile extends into the charging pile through a connection port of the charging pile and a cable locking apparatus of the charging pile. The cable locking apparatus of the charging pile tightly presses, along the circumferential direction of the liquid-cooling cable 401, the end that is of the liquid-cooling cable 401 and that is connected to the charging pile, to fasten the liquid-cooling cable 401 to the cable locking apparatus of the charging pile.

Based on a same concept, an embodiment of this application further provides a liquid-cooling charging pile. The liquid-cooling charging pile includes a liquid-cooling charging connector and a pile body. The liquid-cooling charging connector includes a charging connector head and a liquid-cooling cable. The charging connector head is configured to connect to a charging socket of an electric vehicle. The liquid-cooling cable includes a liquid-cooling pipe, a charging cable, and a protection sleeve, and the protection sleeve circumferentially surrounds the liquid-cooling pipe and the charging cable. One end of the liquid-cooling cable is connected to the charging connector head, and the other end of the liquid-cooling cable is connected to the pile body. At least one end of the liquid-cooling cable includes an inner protection ring. The inner protection ring circumferentially surrounds the liquid-cooling pipe and the charging cable, and the protection sleeve circumferentially surrounds the inner protection ring.

Based on this disposition, when the liquid-cooling cable is connected to the charging connector head in a crimping manner or the liquid-cooling cable is connected to the charging pile in a crimping manner, the inner protection ring may bear a part of pressure, so that pressure on the liquid-cooling pipe can be reduced, a deformation degree of the liquid-cooling pipe can be reduced, and resistance to a coolant in flowing in the liquid-cooling pipe is reduced. Therefore, the coolant flows more smoothly in the liquid-cooling pipe, thereby improving a heat dissipation capability for the charging connector.

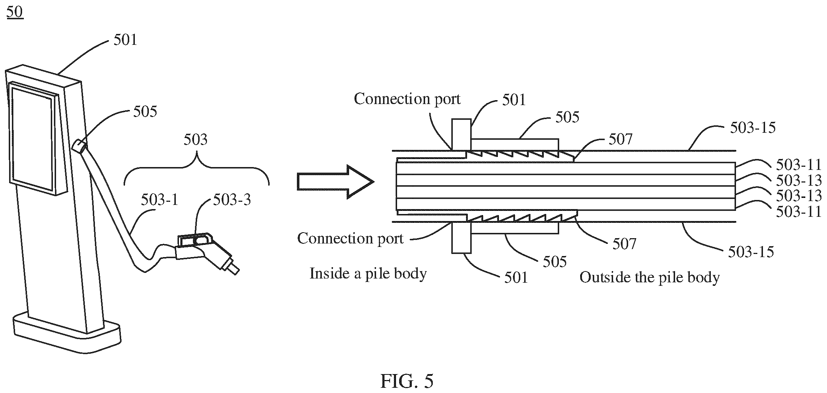

FIG. 5 is a diagram of a liquid-cooling charging pile according to this embodiment of this application. The liquid-cooling charging pile 50 includes a pile body 501, a liquid-cooling charging connector 503, and a cable locking apparatus 505, and the pile body 501 includes a connection port. The cable locking apparatus 505 is of a hollow structure. The cable locking apparatus 505 is located outside the pile body 501 and is fastened to the pile body 501. A through hole of the cable locking apparatus 505 communicates with the connection port of the pile body 501.

The liquid-cooling charging connector 503 includes a charging connector head 503-3 and a liquid-cooling cable 503-1. The liquid-cooling cable 503-1 includes a liquid-cooling pipe 503-11, a charging cable 503-13, and a protection sleeve 503-15. The protection sleeve 503-15 circumferentially surrounds the liquid-cooling pipe 503-11 and the charging cable 503-13. One end of the liquid-cooling cable 503-1 is connected to the charging connector head 503-3, and the other end of the liquid-cooling cable 503-1 is connected to the pile body 501.

The end that is of the liquid-cooling cable 503-1 and that is connected to the pile body 501 includes an inner protection ring 507. The end that is of the liquid-cooling cable 503-1 and that is connected to the pile body 501 extends into the pile body 501 through the cable locking apparatus 505 and the connection port of the pile body 501. The cable locking apparatus 505 tightly presses, along a circumferential direction of the liquid-cooling cable 503-1, the end that is of the liquid-cooling cable 503-1 and that is connected to the pile body 501, to fasten the liquid-cooling cable 503-1 to the cable locking apparatus 505.

In a possible implementation, a compressive strength of the inner protection ring 507 is greater than a compressive strength of the liquid-cooling pipe 501-3. Based on this disposition, the inner protection ring 507 can bear most pressure and is not easily deformed, thereby greatly reducing pressure on the liquid-cooling pipe 501-3, to better protect the liquid-cooling pipe 501-3.

A shape and a material of the inner protection ring 507 are the same as those of the inner protection ring. A manner of fastening the cable locking apparatus 505 to the pile body 501 is the same as a manner of fastening the cable locking apparatus to the liquid-cooling charging connector. Details are not described herein again.

In a possible implementation, the liquid-cooling cable 503-1 further includes a reinforcing rope. A manner of disposing the reinforcing rope is the same as that described above. Details are not described herein again.

Similarly, the end that is of the liquid-cooling cable 503-1 and that is connected to the charging connector head 503-3 may also include an inner protection ring. A manner of disposing the inner protection ring is the same as that described above. Details are not described herein again.

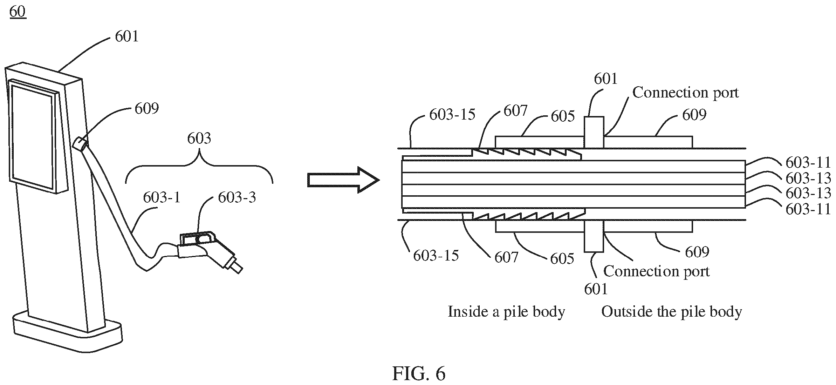

FIG. 6 is a diagram of another liquid-cooling charging pile according to this embodiment of this application. Different from FIG. 5, in FIG. 6, a cable locking apparatus 605 is located inside a pile body 601. The liquid-cooling charging pile 60 includes the pile body 601, a liquid-cooling charging connector 603, and the cable locking apparatus 605, and the pile body 601 includes a connection port. The cable locking apparatus 605 is of a hollow structure. The cable locking apparatus 605 is located inside the pile body 601 and is fastened to the pile body 601.

The liquid-cooling charging connector 603 includes a liquid-cooling cable 603-1 and a charging connector head 603-3. The liquid-cooling cable 603-1 includes a liquid-cooling pipe 603-11, a charging cable 603-13, and a protection sleeve 603-15. The protection sleeve 603-15 circumferentially surrounds the liquid-cooling pipe 603-11 and the charging cable 603-13. One end of the liquid-cooling cable 603-1 is connected to the charging connector head 603-3, and the other end of the liquid-cooling cable 603-1 is connected to the pile body 601.

The end that is of the liquid-cooling cable 603-1 and that is connected to the pile body 601 includes an inner protection ring 607. The end that is of the liquid-cooling cable 603-1 and that is connected to the pile body 601 extends into the pile body 601 through the connection port of the pile body 601 and the cable locking apparatus 605. The cable locking apparatus 605 tightly presses, along a circumferential direction of the liquid-cooling cable 603-1, the end that is of the liquid-cooling cable 603-1 and that is connected to the pile body 601, to fasten the liquid-cooling cable 603-1 to the cable locking apparatus 605.

In a possible implementation, the liquid-cooling charging pile 60 further includes an outer protection ring 609. One end of the outer protection ring 609 is fastened to an outer surface of the pile body 601, and a through hole of the outer protection ring 609 communicates with the connection port of the pile body 601. The end that is of the liquid-cooling cable 603-1 and that is connected to the pile body 601 extends into the pile body 601 through the outer protection ring 609, the connection port of the pile body 601, and the cable locking apparatus 605. The outer protection ring 609 is fastened to the protection sleeve 603-15 of the liquid-cooling cable 603-1, and a minimum bending radius of the outer protection ring 609 is greater than a minimum bending radius of the charging cable 603-13 and a minimum bending radius of the liquid-cooling pipe 603-11.

A manner of fastening the outer protection ring 609 to the protection sleeve 603-15 of the liquid-cooling cable 603-1 is the same as that described above. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A liquid-cooling charging connector, wherein the liquid-cooling charging connector comprises a charging connector head and a liquid-cooling cable, the charging connector head is configured to connect to a charging socket of an electric vehicle, the liquid-cooling cable comprises a liquid-cooling pipe, a charging cable, and a protection sleeve, the protection sleeve circumferentially surrounds the liquid-cooling pipe and the charging cable, one end of the liquid-cooling cable is connected to the charging connector head, and the other end of the liquid-cooling cable is configured to connect to a charging pile; and
at least one end of the liquid-cooling cable comprises an inner protection ring, the inner protection ring circumferentially surrounds the liquid-cooling pipe and the charging cable, and the protection sleeve circumferentially surrounds the inner protection ring.

2. The liquid-cooling charging connector according to claim 1, wherein a compressive strength of the inner protection ring is greater than a compressive strength of the liquid-cooling pipe.

3. The liquid-cooling charging connector according to claim 2, wherein a surface that is of the inner protection ring and that faces the protection sleeve comprises a protrusion or a groove.

4. The liquid-cooling charging connector according to claim 3, wherein the charging connector head comprises a charging interface and a cable connection end, the charging interface is configured to connect to the charging socket of the electric vehicle, and the cable connection end comprises a connection port;
the liquid-cooling charging connector further comprises a cable locking apparatus, the cable locking apparatus is of a hollow structure, the cable locking apparatus is located outside or inside the charging connector head, and the cable locking apparatus is fastened to the charging connector head; and
the end that is of the liquid-cooling cable and that is connected to the charging connector head comprises the inner protection ring, the end that is of the liquid-cooling cable and that is connected to the charging connector head extends into the charging connector head through the cable locking apparatus and the connection port, and the cable locking apparatus tightly presses, along a circumferential direction of the liquid-cooling cable, the end that is of the liquid-cooling cable and that is connected to the charging connector head, to fasten the liquid-cooling cable to the cable locking apparatus.

5. The liquid-cooling charging connector according to claim 4, wherein the cable locking apparatus is located inside the charging connector head and is fastened to the charging connector head, the liquid-cooling charging connector further comprises an outer protection ring, and one end of the outer protection ring is fastened to the cable connection end; and
the end that is of the liquid-cooling cable and that is connected to the charging connector head extends into the charging connector head through the outer protection ring, the connection port, and the cable locking apparatus, the outer protection ring is fastened to the protection sleeve of the liquid-cooling cable, and a minimum bending radius of the outer protection ring is greater than a minimum bending radius of the charging cable and a minimum bending radius of the liquid-cooling pipe.

6. The liquid-cooling charging connector according to claim 4 or 5, wherein the liquid-cooling cable further comprises a reinforcing rope, the inner protection ring circumferentially surrounds the reinforcing rope, the liquid-cooling pipe, and the charging cable, one end of the reinforcing rope extends into the charging connector head and is fastened to the charging connector head, or one end of the reinforcing rope is fastened to the cable locking apparatus of the liquid-cooling charging connector, the other end of the reinforcing rope is configured to extend into the charging pile and is fastened to the charging pile, or the other end of the reinforcing rope is configured to be fastened to a cable locking apparatus of the charging pile, and a length of the reinforcing rope is less than a length of the liquid-cooling pipe and a length of the charging cable.

7. The liquid-cooling charging connector according to claim 6, wherein the charging cable comprises a power cable, a communication cable, and a ground cable, the charging connector head comprises a charging terminal, the charging terminal comprises a power terminal correspondingly connected to the power cable, a communication terminal correspondingly connected to the communication cable, and a ground terminal correspondingly connected to the ground cable; and
the charging connector head further comprises a cooling pool, the cooling pool is located on a surface of the power terminal, the cooling pool is configured to dissipate heat for the power terminal, the charging cable extends into the charging connector head and is correspondingly connected to the charging terminal, and the liquid-cooling pipe extends into the charging connector head and communicates with the cooling pool.

8. The liquid-cooling charging connector according to claim 2 or 3, wherein the end that is of the liquid-cooling cable and that is connected to the charging pile comprises the inner protection ring, the end that is of the liquid-cooling cable and that is connected to the charging pile extends into the charging pile through a connection port of the charging pile and the cable locking apparatus of the charging pile, and the cable locking apparatus of the charging pile tightly presses, along the circumferential direction of the liquid-cooling cable, the end that is of the liquid-cooling cable and that is connected to the charging pile, to fasten the liquid-cooling cable to the cable locking apparatus of the charging pile.

9. A liquid-cooling charging pile, wherein the liquid-cooling charging pile comprises a liquid-cooling charging connector and a pile body, the liquid-cooling charging connector comprises a charging connector head and a liquid-cooling cable, the charging connector head is configured to connect to a charging socket of an electric vehicle, the liquid-cooling cable comprises a liquid-cooling pipe, a charging cable, and a protection sleeve, the protection sleeve circumferentially surrounds the liquid-cooling pipe and the charging cable, one end of the liquid-cooling cable is connected to the charging connector head, and the other end of the liquid-cooling cable is connected to the pile body; and
at least one end of the liquid-cooling cable comprises an inner protection ring, the inner protection ring circumferentially surrounds the liquid-cooling pipe and the charging cable, and the protection sleeve circumferentially surrounds the inner protection ring.

10. The liquid-cooling charging pile according to claim 9, wherein a compressive strength of the inner protection ring is greater than a compressive strength of the liquid-cooling pipe.

11. The liquid-cooling charging pile according to claim 10, wherein a surface that is of the inner protection ring and that faces the protection sleeve comprises a protrusion or a groove.

12. The liquid-cooling charging pile according to claim 11, wherein the pile body of the liquid-cooling charging pile comprises a connection port, the liquid-cooling charging pile further comprises a cable locking apparatus, the cable locking apparatus is of a hollow structure, the cable locking apparatus is located outside or inside the pile body, and the cable locking apparatus is fastened to the pile body; and
the end that is of the liquid-cooling cable and that is connected to the liquid-cooling charging pile comprises the inner protection ring, the end that is of the liquid-cooling cable and that is connected to the liquid-cooling charging pile extends into the pile body through the cable locking apparatus and the connection port, and the cable locking apparatus tightly presses, along a circumferential direction of the liquid-cooling cable, the end that is of the liquid-cooling cable and that is connected to the liquid-cooling charging pile, to fasten the liquid-cooling cable to the cable locking apparatus.

13. The liquid-cooling charging pile according to claim 12, wherein the cable locking apparatus is located inside the pile body and is fastened to the pile body, the liquid-cooling charging pile further comprises an outer protection ring, and one end of the outer protection ring is fastened to an outer surface of the pile body; and
the end that is of the liquid-cooling cable and that is connected to the liquid-cooling charging pile extends into the pile body through the outer protection ring, the connection port, and the cable locking apparatus, the outer protection ring is fastened to the protection sleeve of the liquid-cooling cable, and a minimum bending radius of the outer protection ring is greater than a minimum bending radius of the charging cable and a minimum bending radius of the liquid-cooling pipe.

14. The liquid-cooling charging pile according to claim 12 or 13, wherein the liquid-cooling cable further comprises a reinforcing rope, the inner protection ring circumferentially surrounds the reinforcing rope, the liquid-cooling pipe, and the charging cable, one end of the reinforcing rope extends into the charging connector head and is fastened to the charging connector head, or one end of the reinforcing rope is fastened to a cable locking apparatus of the charging connector head, the other end of the reinforcing rope extends into the pile body of the liquid-cooling charging pile and is fastened to the pile body, or the other end of the reinforcing rope is fastened to the cable locking apparatus of the liquid-cooling charging pile, and a length of the reinforcing rope is less than a length of the liquid-cooling pipe and a length of the charging cable.

15. The liquid-cooling charging pile according to claim 14, wherein the charging connector head comprises a charging interface and a cable connection end, and the charging interface is configured to connect to the charging socket of the electric vehicle; and
the end that is of the liquid-cooling cable and that is connected to the charging connector head comprises the inner protection ring, the end that is of the liquid-cooling cable and that is connected to the charging connector head extends into the charging connector head through a connection port of the cable connection end and the cable locking apparatus of the charging connector head, and the cable locking apparatus of the charging connector head tightly presses, along the circumferential direction of the liquid-cooling cable, the end that is of the liquid-cooling cable and that is connected to the charging connector head, to fasten the liquid-cooling cable to the cable locking apparatus of the charging connector head.
